# EUROPÄISCHE PATENTSCHRIFT

(11) **EP 3 946 862 B1**
(45) Veröffentlichungstag und Bekanntmachung des Hinweises auf die Patenterteilung: **06.09.2023**
(21) Anmeldenummer: 20716406.2
(22) Anmeldetag: 25.03.2020
(51) Int. Cl.: B28B 1/00, E04G 21/04, B28B 23/00, B33Y 30/00

(54) **VERFAHREN ZUR HERSTELLUNG VON EINEM BAUWERKSTEIL, SYSTEM ZUR HERSTELLUNG VON EINEM BAUWERKSTEIL UND BAUWERKSTEIL**
METHOD FOR PRODUCING A BUILDING COMPONENT, SYSTEM FOR PRODUCING A BUILDING COMPONENT AND BUILDING COMPONENT
PROCÉDÉ POUR PRODUIRE UNE PIÈCE DE CONSTRUCTION, SYSTÈME POUR PRODUIRE UNE PIÈCE DE CONSTRUCTION ET PIÈCE DE CONSTRUCTION

(30) Priorität: 27.03.2019 DE 102019204230
(43) Veröffentlichungstag der Anmeldung: 09.02.2022
(73) Patentinhaber: Putzmeister Engineering GmbH, 72631 Aichtal (DE)
(72) Erfinder: HÄFNER, Jens, 70599 Stuttgart (DE); HUTH, Tobias, 70327 Stuttgart (DE); KASTEN, Knut, 73760 Ostfildern (DE); MÖGLE, Peter, 70771 Leinfelden (DE)
(74) Vertreter: Patentanwälte Ruff, Wilhelm, Beier, Dauster & Partner mbB
(86) Internationale Anmeldenummer: PCT/EP2020/058318
(87) Internationale Veröffentlichungsnummer: WO 2020/193614

(56) Entgegenhaltungen:
- WO-A1-2019/048752
- FR-A1- 3 060 043
- KR-A- 20180 012 432

## Beschreibung

### ANWENDUNGSGEBIET UND STAND DER TECHNIK

Die Erfindung bezieht sich auf ein Verfahren zur Herstellung von einem Bauwerksteil, ein System zur Herstellung von einem Bauwerksteil und ein Bauwerksteil.

Die FR 3 060 043 A1 offenbart den Oberbegriff der Ansprüche 1, 8 und 15, sie betrifft insbesondere ein Verfahren zur Herstellung eines lumineszierenden Einsatzes, der an einem Konstruktionselement montiert werden kann, wobei der Einsatz mindestens ein gefärbtes lumineszierendes Material umfasst, wobei das gefärbte lumineszierende Material eine feste, transparente oder transluzente Matrix umfasst, und ein farbig lumineszierendes Verbundpigment, das in der festen Matrix dispergiert ist, wobei das gefärbte lumineszierende Verbundpigment aus mindestens einem lumineszierenden Pigment und mindestens einem Farbmittel gebildet ist, wobei das Verfahren die folgenden Schritte umfasst: - Erstellen eines ersten Computermodells des lumineszierenden Einsatzes, umfassend räumliche Koordinaten des Einsatzes; dann - Aufbringen, entsprechend den räumlichen Koordinaten, von mindestens einem farbigen lumineszierenden Material, wobei das Aufbringen in einer oder mehreren aufeinanderfolgenden Schichten auf einem Träger durchgeführt wird.

Die WO 2019/048752 A1 betrifft ein System zum Extrudieren von Kügelchen aus zementartigem Material für einen Roboter, der für die additive Fertigung von architektonischen Strukturen verwendet wird, umfassend: einen Extrusionskopf zum Extrudieren von Kügelchen aus zementartigem Material, umfassend eine Einlassmündung, eine Auslassdüse und eine Mischkammer; und einen Zuführkreislauf zum Zuführen von zementartigem Material zu dem Extrusionskopf, umfassend einen Vorratsbehälter, eine Zuführleitung und eine Druckerhöhungspumpe. Das System ist dadurch gekennzeichnet, dass es ferner eine Vorrichtung zum Färben des im Extrusionskopf vorhandenen zementartigen Materials umfasst, die mindestens einen Vorrat an Farbpigmenten, mindestens eine Färbeleitung mündend in die Mischkammer, wobei jede Kolorierungsleitung mit Mitteln zum Einstellen der in die Mischkammer eingespritzten Pigmentmenge ausgestattet ist, so dass die Einstellmittel koordiniert betrieben werden können, um die Farbe der Kügelchen aus zementartigem Material zu definieren, die durch die Auslassdüse extrudiert werden.

Die KR 2018 0012432 A bezieht sich auf eine Zementmörtel-Zuführvorrichtung eines 3D-Betondruckers und überträgt und gibt insbesondere Zementmörtel, der durch eine Düse eines 3D-Betondruckers zugeführt wird, mittels einer 4-Blatt- oder 5-Blatt-Schneckenschraube, die von einem kleinen Motor mit geringerem Leistungsfaktor gedreht ist. Diese umfasst: einen Motor; eine Untersetzungsgetriebeeinheit, die im Inneren eines Getriebekastens in einem unteren Teil des Motors installiert ist; eine Kupplung, die eine Welle der Untersetzungsgetriebeeinheit mit einer Schneckenschraube koppelt; ein Y-Verbindungsversorgungsrohr, das mit einem kreisförmigen Element gekoppelt ist, das einstückig mit dem Getriebekasten ausgebildet ist; ein unteres kreisförmiges Element, das mit einem unteren Teil des Versorgungsrohrs der Y-Verbindung verbunden ist; und eine Düse, die mit dem unteren kreisförmigen Element gekoppelt ist. Die Schneckenschraube ist in einem vertikalen Rohr des Versorgungsrohrs der Y-Verbindung und in dem unteren kreisförmigen Element angeordnet, um gedreht zu werden. Ein Schrägrohr des Versorgungsrohrs der Y-Verbindung ist mit einem Trichter zum Einspritzen von Zementmörtel verbunden. Der durch den Trichter zum Einspritzen von Zementmörtel eingespritzte Zementmörtel wird durch das Schrägrohr des Y-Verbindungs-Zuführrohrs einem Rotationsblatt auf einer Seite der Schneckenschraube zugeführt.

### AUFGABE UND LÖSUNG

Der Erfindung liegt als Aufgabe die Bereitstellung eines Verfahrens zur Herstellung von einem Bauwerksteil, eines Systems zur Herstellung von einem Bauwerksteil und eines Bauwerkteils zugrunde, das, insbesondere jeweils, verbesserte Eigenschaften aufweist.

Die Erfindung löst diese Aufgabe durch die Bereitstellung eines Verfahrens mit den Merkmalen des Anspruchs 1, eines Systems mit den Merkmalen des Anspruchs 8 und eines Bauwerkteils mit den Merkmalen des Anspruchs 15. Vorteilhafte Weiterbildungen und/oder Ausgestaltungen der Erfindung sind in den abhängigen Ansprüchen beschrieben.

Das erfindungsgemäße, insbesondere automatische, Verfahren ist zur Herstellung von einem, insbesondere 3-dimensionalen, Bauwerksteil ausgebildet bzw. konfiguriert bzw. vorgesehen. Das Bauwerksteil weist mindestens einen, insbesondere kontinuierlichen, ersten Bereich und einen, insbesondere kontinuierlichen, an den ersten, insbesondere unmittelbar bzw. direkt, anschließenden bzw. angrenzenden, zweiten Bereich auf, insbesondere zeitlich nach der Herstellung. In dem ersten Bereich ist eine Installations- bzw. Ausrüstungsstruktur von Baustoff verborgen, insbesondere zeitlich nach der Herstellung. Das Verfahren weist die Schritte auf: a) insbesondere automatisches, Ausbringen bzw. Austragen von Baustoff zur Herstellung von dem einen Bereich und, insbesondere automatisches und/oder lokales, Versehen des Baustoffs mit Markierungs- bzw. Detektionsstoff zeitlich vor, gleichzeitig mit und/oder zeitlich nach, insbesondere entweder zeitlich vor oder gleichzeitig mit oder zeitlich nach, dem Ausbringen; b) insbesondere automatisches, Ausbringen bzw. Austragen von Baustoff zur Herstellung von dem anderen Bereich, insbesondere zeitlich vor, gleichzeitig mit und/oder zeitlich nach, insbesondere entweder zeitlich vor oder gleichzeitig mit oder zeitlich nach, dem Schritt a).

Insbesondere kann das Bauwerksteil ein Gebäudebauwerksteil und/oder eine Wand und/oder eine Decke sein.

Der erste Bereich kann als erste Zone bezeichnet werden und/oder der zweite Bereich kann als zweite Zone bezeichnet werden. Zusätzlich oder alternativ kann der zweite Bereich von dem ersten Bereich verschieden sein. Insbesondere kann oder braucht in dem zweiten Bereich keine Installationsstruktur von Baustoff verborgen sein. Weiter zusätzlich oder alternativ können der erste Bereich und der zweite Bereich entlang bzw. parallel zu einer, insbesondere nächsten, Oberfläche des Baustoffs und/oder des Bauwerkteils verschieden, insbesondere an verschiedenen Positionen bzw. Stellen, insbesondere angeordnet, werden oder sein.

Die Installationsstruktur kann von Baustoff verschieden sein. Zusätzlich oder alternativ kann der Baustoff Beton, insbesondere Frischbeton, und/oder thixotrop sein. Weiter zusätzlich oder alternativ kann der Baustoff ein Größtkorn von minimal 4 Millimeter (mm), insbesondere von minimal 10 mm, insbesondere von minimal 16 mm, aufweisen.

Verborgen kann als verdeckt bezeichnet werden und/oder bedeuten, dass die Installationsstruktur, insbesondere horizontal, hinter und/oder, insbesondere vertikal, unter Baustoff angeordnet ist. Insbesondere kann die Installationsstruktur von Baustoff umschlossen sein. Somit kann die Installationsstruktur mindestens auf einer Seite des Bauwerkteils, insbesondere ohne weiteres, nicht sichtbar sein.

Insbesondere vorzugsweise, kann der erste Bereich der eine Bereich sein und der zweite Bereich kann der andere Bereich sein. Alternativ kann der erste Bereich der andere Bereich sein und der zweite Bereich kann der eine Bereich sein.

Der Baustoff zur Herstellung von dem anderen Bereich kann oder braucht nicht mit Markierungsstoff versehen zu werden und/oder zu sein.

Der Markierungsstoff kann von dem Baustoff, insbesondere Betonbeschleuniger, und/oder der Installationsstruktur verschieden sein, insbesondere zeitlich vor dem Versehen. Zusätzlich oder alternativ kann der Schritt a) aufweisen: Einbringen des Markierungsstoffs in den Baustoff.

Weiter zusätzlich oder alternativ kann der Markierungsstoff zur, insbesondere lokalen, Veränderung der, insbesondere physikalischen, Eigenschaften des Baustoffs, insbesondere im Vergleich zu ohne Markierungsstoff, ausgebildet sein.

Dies, insbesondere der Markierungsstoff, ermöglicht, den/die, insbesondere ohne Markierungsstoff nicht erkennbare/n bzw. wahrnehmbare/n, einen Bereich/Installationsstruktur zu lokalisieren bzw. zu detektieren, insbesondere relativ genau. Somit kann dies ermöglichen, ein, insbesondere unbeabsichtigtes, Beschädigen der Installationsstruktur zu vermeiden, insbesondere bei einer Bearbeitung, insbesondere bei Einbringung von Befestigungen und Kabelkanälen, des Bauwerkteils, insbesondere des ersten Bereichs. Zusätzlich oder alternativ kann dies ermöglichen, eine bisherige Lokalisierung, z.B. anhand von meist relativ ungenau dokumentierten und/oder meist relativ ungenau umgesetzten Bauplänen, des ersten Bereichs/der Installationsstruktur zeitlich zu verkürzen oder sogar vollständig zu vermeiden. Somit weist das Verfahren verbesserte Eigenschaften auf.

Der Markierungsstoff ist eine Farbe, insbesondere ein Farbstoff. Dies, insbesondere die Farbe, ermöglicht eine optische Detektion bzw. Erkennung, insbesondere in einem Rohbauzustand des Bauwerkteils, insbesondere des einen Bereichs, ohne weiteres und/oder in einem Ausbauzustand des Bauwerkteils, insbesondere des einen Bereichs, z.B. anhand von Bohrstaub. Insbesondere kann die Farbe von einer, insbesondere natürlichen, Farbe des Baustoffs, insbesondere im Vergleich zu ohne Markierungsstoff, wie z.B. grau oder weiß, verschieden sein, wie z.B. blau, lila, gelb, grün, oder rot. Weiter zusätzlich oder alternativ kann der Baustoff durch den Markierungsstoff, insbesondere die Farbe, insbesondere in dem einen Bereich bzw. lokal, durchfärbt sein. Weiter zusätzlich oder alternativ kann der Baustoff, insbesondere in dem ersten Bereich, mit der Farbe derart versehen werden oder sein, dass der Baustoff und/oder das Bauwerkteil, insbesondere seine Oberfläche, einen Farbverlauf, insbesondere zunehmender Intensität, in Richtung, insbesondere orthogonal und/oder radial zu, der Installationsstruktur aufweisen kann, insbesondere entlang bzw. parallel zu der Oberfläche. Dies kann ermöglichen, einen Abstand zu der Installationsstruktur anzuzeigen. Weiter zusätzlich oder alternativ kann die Farbe einen Massenanteil von minimal 0,2 Prozent (%), insbesondere von minimal 2 %, und/oder maximal 20 %, insbesondere 10%, vom Baustoffgewicht, insbesondere Zementgewicht, haben.

Die Installationsstruktur ist aus einer Menge von verschiedenen Installationstypen bzw. -arten. Den verschiedenen Installationstypen sind verschiedene Farben zugeordnet. Dies ermöglicht, den Installationstyp eindeutig anzuzeigen bzw. zu identifizieren.

In einer Weiterbildung der Erfindung ist der Markierungsstoff, insbesondere in dem ersten Bereich, insbesondere mindestens, einer, insbesondere der und/oder nächsten, Oberfläche des Baustoffs und/oder des Bauwerkteils räumlich näher als die Installationsstruktur angeordnet, insbesondere in einer zu der Oberfläche orthogonalen Richtung. Dies ermöglicht bei einer Bearbeitung des Bauwerkteils, insbesondere des ersten Bereichs, den Markierungsstoff zeitlich vor der Installationsstruktur, insbesondere einer Beschädigung der Installationsstruktur, wahrzunehmen. Insbesondere kann der Markierungsstoff, insbesondere teilweise, an der Oberfläche angeordnet sein. Dies kann ermöglichen, den einen, insbesondere ersten, Bereich, insbesondere den Markierungsstoff, von außen wahrzunehmen.

Insbesondere kann der Markierungsstoff zur, insbesondere lokalen, Veränderung bzw. zur, insbesondere lokal, veränderten Erzeugung einer Struktur einer, insbesondere der, Oberfläche des Baustoffs und/oder des Bauwerkteils ausgebildet sein, insbesondere ein Betonverzögerer.

In einer Weiterbildung der Erfindung ist der Markierungsstoff ein ferromagnetischer Stoff. Dies, insbesondere der ferromagnetische Stoff, ermöglicht eine magnetische Detektion bzw. Erkennung. Insbesondere kann der ferromagnetische Stoff Metall-Flocken aufweisen oder sein.

Insbesondere kann die Installationsstruktur ein Schacht für eine Installation und/oder eine Leitung, insbesondere ein Rohr, ein Schlauch und/oder ein Kabel, aufweisen oder sein.

In einer Weiterbildung der Erfindung ist die Installationsstruktur eine Gasinstallation, eine Wasserinstallation, eine Heizungsinstallation, eine Kühlungsinstallation, eine Klimainstallation, eine Lüftungsinstallation und/oder eine Elektroinstallation.

In einer Weiterbildung der Erfindung weist entweder, insbesondere vorzugsweise, der Schritt a) oder der Schritt b) auf: insbesondere automatisches, Einbringen der Installationsstruktur in den Baustoff. Dies ermöglicht die Herstellung des Bauwerkteils zeitlich zu verkürzen.

Insbesondere kann das Verfahren ein Fertigbauverfahren aufweisen, wobei das Fertigbauverfahren mindestens das Ausbringen von, insbesondere dem, Baustoff aufweisen kann.

In einer Weiterbildung der Erfindung weist das Verfahren ein, insbesondere automatisches, 3D-Druckverfahren, insbesondere Extrusionsverfahren, auf, insbesondere ist ein 3D-Druckverfahren. Das 3D-Druckverfahren weist mindestens das Ausbringen von, insbesondere dem, Baustoff auf. Insbesondere kann das 3D-Druckverfahren als additives Fertigungsverfahren bezeichnet werden. Zusätzlich oder alternativ kann das 3D-Druckverfahren, insbesondere Extrusionsverfahren, das Ausbringen, insbesondere Extrudieren, von mindestens einem Strang von, insbesondere dem, Baustoff aufweisen. Insbesondere kann der, insbesondere ausgebrachte, Strang kontinuierlich sein bzw. sich in, insbesondere gewisser, Länge erstrecken. Zusätzlich oder alternativ kann der Strang, insbesondere eine Breite des Strangs, die, insbesondere gesamte, Wand- und/oder Deckendicke aufweisen. Weiter zusätzlich oder alternativ kann der Strang, insbesondere ein Querschnitt des Strangs, mit einer Unterbrechung ausgebracht werden. Dies, insbesondere die Unterbrechung, kann den Schacht bzw. die Installationsstruktur bilden. Weiter zusätzlich oder alternativ kann der Strang, insbesondere schichtweise, auf einem bzw. einen bereits gedruckten bzw. ausgebrachten Strang abgelegt bzw. aufgetragen werden und/oder auf dem bzw. den Strang kann, insbesondere schichtweise, ein weiterer Strang abgelegt bzw. aufgetragen werden. Weiter zusätzlich oder alternativ kann der Baustoff stichfest bzw. formstabil, insbesondere gleichzeitig mit dem Ausbringen, sein. Weiter zusätzlich oder alternativ kann das 3D-Druckverfahren das Versehen von, insbesondere dem, Baustoff mit, insbesondere dem, Markierungsstoff aufweisen.

In einer Weiterbildung der Erfindung weist der Schritt a) auf: insbesondere automatisches, Beimischen, insbesondere Einspritzen, von, insbesondere dem, Markierungsstoff in den Baustoff zeitlich vor dem Ausbringen und Ausbringen von, insbesondere dem, Baustoff mit dem beigemischten, insbesondere eingespritzten, Markierungsstoff. Dies ermöglicht eine relativ gute Durchmischung, insbesondere Durchfärbung, des Baustoffs mit dem Markierungsstoff, insbesondere der Farbe. Insbesondere kann mit einem Druck größer 10 bar, insbesondere größer 100 bar, eingespritzt werden. Dies, insbesondere der hohe Druck, kann ermöglichen den Markierungsstoff weit zu verteilen, so dass kein weiteres Mischorgan notwendig sein braucht.

Das erfindungsgemäße System ist zur, insbesondere automatischen, Herstellung von einem, insbesondere dem, Bauwerksteil ausgebildet bzw. konfiguriert. Das Bauwerksteil weist mindestens einen, insbesondere den und/oder kontinuierlichen, ersten Bereich und einen, insbesondere den und/oder kontinuierlichen, an den ersten anschließenden, zweiten Bereich auf, insbesondere zeitlich nach der Herstellung. In dem ersten Bereich ist eine, insbesondere die, Installationsstruktur von, insbesondere dem, Baustoff verborgen, insbesondere zeitlich nach der Herstellung. Das System weist eine, insbesondere elektrisch, ansteuerbare Ausbring- bzw. Austragvorrichtung, eine, insbesondere elektrisch, ansteuerbare Markierungsvorrichtung und eine, insbesondere elektrische, Steuereinrichtung, insbesondere einen Computer, auf. Die ansteuerbare Ausbringvorrichtung ist zum, insbesondere automatischen, Ausbringen bzw. Austragen von, insbesondere dem, Baustoff ausgebildet bzw. konfiguriert. Die ansteuerbare Markierungsvorrichtung ist zum, insbesondere automatischen und/oder lokalem, Versehen des Baustoffs mit, insbesondere dem, Markierungsstoff zeitlich vor, gleichzeitig mit und/oder zeitlich nach, insbesondere entweder zeitlich vor oder gleichzeitig mit oder zeitlich nach, dem Ausbringen ausgebildet bzw. konfiguriert. Die Steuereinrichtung ist zum, insbesondere automatischen und/oder selbstständigen, Ansteuern der Ausbringvorrichtung und der Markierungsvorrichtung derart ausgebildet bzw. konfiguriert, dass ein, insbesondere der, Schritt a) Ausbringen von, insbesondere dem, Baustoff zur Herstellung von dem einen Bereich mittels der Ausbringvorrichtung und Versehen des Baustoffs mit, insbesondere dem, Markierungsstoff zeitlich vor, gleichzeitig mit und/oder zeitlich nach, insbesondere entweder zeitlich vor oder gleichzeitig mit oder zeitlich nach, dem Ausbringen mittels der Markierungsvorrichtung aufweist, und ein, insbesondere der, Schritt b) Ausbringen von, insbesondere dem, Baustoff zur Herstellung von dem anderen Bereich mittels der Ausbringvorrichtung, insbesondere zeitlich vor, gleichzeitig mit und/oder zeitlich nach, insbesondere entweder zeitlich vor oder gleichzeitig mit oder zeitlich nach, dem Schritt a), aufweist. Der Markierungsstoff ist eine, insbesondere die, Farbe. Die Installationsstruktur ist aus einer, insbesondere der, Menge von verschiedenen Installationstypen. Den verschiedenen Installationstypen sind verschiedene Farben zugeordnet.

Das System kann den/die gleichen Vorteil/e wie das zuvor beschriebene Verfahren ermöglichen.

Insbesondere kann das System zum, insbesondere automatischen, Durch- bzw. Ausführen des zuvor beschrieben Verfahrens ausgebildet bzw. konfiguriert sein. Zusätzlich oder alternativ kann die Markierungsvorrichtung von der Ausbringvorrichtung verschieden sein.

In einer Weiterbildung der Erfindung weist das System eine, insbesondere elektrisch, ansteuerbare Einbringvorrichtung auf. Die Einbringvorrichtung ist zum, insbesondere automatischen, Einbringen der Installationsstruktur in den Baustoff ausgebildet bzw. konfiguriert. Die Steuereinrichtung ist zum, insbesondere automatischen und/oder selbstständigen, Ansteuern der Einbringvorrichtung derart ausgebildet bzw. konfiguriert, dass entweder der Schritt a) oder der Schritt b) Einbringen der Installationsstruktur in den Baustoff aufweist.

In einer Weiterbildung der Erfindung weist das System eine, insbesondere elektrisch, ansteuerbare, gemeinsame Bewegungsvorrichtung, insbesondere einen, insbesondere elektrisch, ansteuerbaren, gemeinsamen Bewegungsarm auf. Die gemeinsame Bewegungsvorrichtung ist zur, insbesondere automatischen, gemeinsamen, insbesondere mindestens translatorischen, Bewegung der Ausbringvorrichtung und der Markierungsvorrichtung, insbesondere gleichzeitig mit dem Ausbringen und dem Versehen, ausgebildet bzw. konfiguriert. Die Steuereinrichtung ist zum, insbesondere automatischen und/oder selbstständigen, Ansteuern der gemeinsamen Bewegungsvorrichtung ausgebildet bzw. konfiguriert. In anderen Worten: die Ausbringvorrichtung und die Markierungsvorrichtung können oder brauchen nicht unabhängig voneinander bewegbar sein. Insbesondere kann die gemeinsame Bewegungsvorrichtung als gemeinsame Positionierungsvorrichtung bezeichnet werden und/oder der gemeinsame Bewegungsarm kann als gemeinsamer Roboterarm und/oder gemeinsamer Mast bezeichnet werden. Zusätzlich oder alternativ können/kann die gemeinsame Bewegungsvorrichtung, insbesondere der gemeinsame Bewegungsarm, und/oder die Ausbringvorrichtung und/oder die Markierungsvorrichtung zur, insbesondere gemeinsamen, rotatorischen Bewegung der Ausbringvorrichtung und der Markierungsvorrichtung, insbesondere gleichzeitig mit dem Ausbringen und dem Versehen, ausgebildet sein.

In einer Weiterbildung weist das System ein 3D-Drucksystem, insbesondere ein Extrusionssystem, auf, insbesondere ist ein 3D-Drucksystem. Das 3D-Drucksystem weist mindestens die Ausbringvorrichtung auf. Insbesondere kann das 3D-Drucksystem die Markierungsvorrichtung aufweisen.

In einer Weiterbildung der Erfindung ist die Markierungsvorrichtung, insbesondere aufweisend mindestens eine, insbesondere ansteuerbare, Einspritzdüse, zum, insbesondere automatischen, Beimischen, insbesondere Einspritzen, von, insbesondere dem, Markierungsstoff in den Baustoff zeitlich vor dem Ausbringen ausgebildet bzw. konfiguriert. Die Ausbringvorrichtung ist zum Ausbringen von, insbesondere dem, Baustoff mit dem beigemischten, insbesondere eingespritzten, Markierungsstoff ausgebildet bzw. konfiguriert.

In einer Weiterbildung der Erfindung weist das System eine, insbesondere elektrisch, ansteuerbare Baustoffpumpe auf. Die Baustoffpumpe ist zur, insbesondere automatischen, Förderung von, insbesondere dem, Baustoff aus der Ausbringvorrichtung heraus ausgebildet bzw. konfiguriert. Die Steuereinrichtung ist zum, insbesondere automatischen und/oder selbstständigen, Ansteuern der Baustoffpumpe ausgebildet bzw. konfiguriert. Insbesondere kann das System eine Baustoffförderleitung aufweisen, wobei die Baustoffförderleitung die Baustoffpumpe mit der Ausbringvorrichtung für eine Strömung bzw. einen Fluss von Baustoff von der Baustoffpumpe durch die Baustoffförderleitung hindurch zu der Ausbringvorrichtung verbinden kann. Zusätzlich oder alternativ kann die Baustoffpumpe diskontinuierlich sein, insbesondere eine Kolbenpumpe, insbesondere eine Zweikolbenpumpe, insbesondere mit einer Rohrweiche.

In einer Weiterbildung der Erfindung ist die Steuereinrichtung zum, insbesondere automatischen und/oder selbstständigen, Ansteuern der Ausbringvorrichtung, der Markierungsvorrichtung, der Einbringvorrichtung, der gemeinsamen Bewegungsvorrichtung und/oder der Baustoffpumpe in Abhängigkeit von Daten, insbesondere einem Bau- bzw. Konstruktionsplan, insbesondere in einem Speicher der Steuereinrichtung, des herzustellenden Bauwerkteils ausgebildet bzw. konfiguriert. Dies ermöglicht, dass ein Arbeiter das System nicht anzusteuern braucht und/oder Fehler beim Bau zu reduzieren oder sogar zu vermeiden.

Das erfindungsgemäße Bauwerksteil weist mindestens einen, insbesondere den und/oder kontinuierlichen, ersten Bereich und einen, insbesondere den und/oder kontinuierlichen, an den ersten anschließenden, zweiten Bereich auf. In dem ersten Bereich ist eine, insbesondere die, Installationsstruktur von, insbesondere dem, Baustoff verborgen. Der eine Bereich weist, insbesondere den, ausgebrachten Baustoff versehen mit, insbesondere dem und/oder eingebrachten und/oder beigemischten, insbesondere eingespritzten, Markierungsstoff auf. Der andere Bereich weist, insbesondere den, ausgebrachten Baustoff auf. Der Markierungsstoff ist eine, insbesondere die, Farbe. Die Installationsstruktur ist aus einer, insbesondere der, Menge von verschiedenen Installationstypen. Den verschiedenen Installationstypen sind verschiedene Farben zugeordnet.

Das Bauwerksteil kann den/die gleichen Vorteil/e wie das zuvor beschriebene Verfahren und/oder das zuvor beschriebene System ermöglichen.

Insbesondere kann das Bauwerksteil mittels des zuvor beschriebenen Verfahrens und/oder des zuvor beschriebenen Systems, insbesondere unmittelbar, hergestellt sein. Zusätzlich oder alternativ kann das Bauwerksteil teilweise oder vollständig wie zuvor für das Verfahren und/oder das System beschrieben ausgebildet bzw. konfiguriert sein.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: schematisch einen Schritt b) eines erfindungsgemäßen Verfahrens zur Herstellung von einem erfindungsgemäßen Bauwerksteil in einer Seitenansicht,
- Fig. 2: schematisch einen Schritt a) des erfindungsgemäßen Verfahrens zur Herstellung von dem erfindungsgemäßen Bauwerksteil in einer Seitenansicht,
- Fig. 3: schematisch einen weiteren Schritt b) des erfindungsgemäßen Verfahrens zur Herstellung von dem erfindungsgemäßen Bauwerksteils in einer Seitenansicht,
- Fig. 4: schematisch einen weiteren Schritt a) des erfindungsgemäßen Verfahrens zur Herstellung von dem erfindungsgemäßen Bauwerksteil in einer Seitenansicht,
- Fig. 5: schematisch weitere Schritte a) und b) des erfindungsgemäßen Verfahrens zur Herstellung von dem erfindungsgemäßen Bauwerksteil in einer Seitenansicht,
- Fig. 6: schematisch das erfindungsgemäße Bauwerksteil der Fig. 5 in einer Querschnittschnittansicht,
- Fig. 7: eine Perspektivansicht eines erfindungsgemäßen Systems zur Herstellung von dem erfindungsgemäßen Bauwerksteil,
- Fig. 8: eine weitere Perspektivansicht des Systems der Fig. 7,
- Fig. 9: eine nochmals weitere Perspektivansicht des Systems der Fig. 7 ohne eine obere Umfangswand,
- Fig. 10: eine Perspektivansicht des Systems der Fig. 7, einer Einbringvorrichtung und einer gemeinsamen Bewegungsvorrichtung, und
- Fig. 11: eine Perspektivansicht des Systems der Fig. 7 und einer Baustoffpumpe.

### DETAILLIERTE BESCHREIBUNG DER AUSFÜHRUNGSBEISPIELE

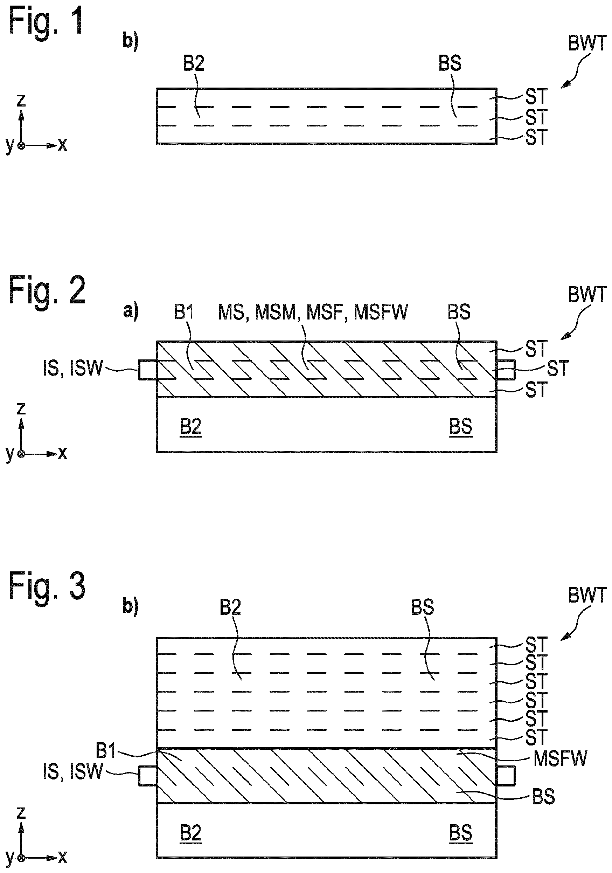

Fig. 1 bis 6 zeigen ein erfindungsgemäßes Verfahren zur Herstellung von einem Bauwerksteil BWT. Das Bauwerksteil BWT weist mindestens einen ersten Bereich B1 und einen an den ersten anschließenden, zweiten Bereich B2 auf, insbesondere zeitlich nach der Herstellung. In dem ersten Bereich B1 ist eine Installationsstruktur IS von Baustoff BS verborgen, insbesondere zeitlich nach der Herstellung. Das Verfahren weist die Schritte auf: a) Ausbringen von Baustoff BS zur Herstellung von dem einen Bereich B1, im gezeigten Ausführungsbeispiel dem ersten Bereich B1, und Versehen des Baustoffs BS mit Markierungsstoff MS, im gezeigten Ausführungsbeispiel zeitlich vor dem Ausbringen; b) Ausbringen von Baustoff zur Herstellung von dem anderen Bereich B2, im gezeigten Ausführungsbeispiel dem zweiten Bereich B2.

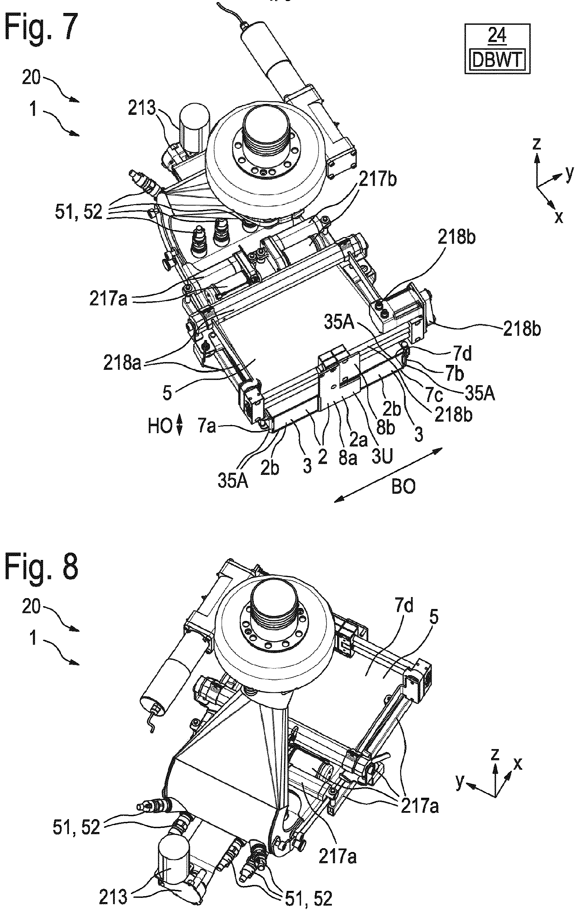

Fig. 7 bis 11 zeigen ein erfindungsgemäßes System 20 zur Herstellung von dem Bauwerksteil BWT. Das System 20 weist eine ansteuerbare Ausbringvorrichtung 1, eine ansteuerbare Markierungsvorrichtung 51 und eine Steuereinrichtung 24 auf. Die ansteuerbare Ausbringvorrichtung 1 ist zum Ausbringen von Baustoff BS ausgebildet. Die ansteuerbare Markierungsvorrichtung 51 ist zum Versehen des Baustoffs BS mit Markierungsstoff MS, im gezeigten Ausführungsbeispiel zeitlich vor dem Ausbringen, ausgebildet. Die Steuereinrichtung 24 ist zum, insbesondere automatischen, Ansteuern der Ausbringvorrichtung 1 und der Markierungsvorrichtung 51 derart ausgebildet, insbesondere steuert derart an, dass der Schritt a) Ausbringen von Baustoff BS zur Herstellung von dem einen Bereich B1 mittels der Ausbringvorrichtung 1 und Versehen des Baustoffs BS mit Markierungsstoff MS, im gezeigten Ausführungsbeispiel zeitlich vor dem Ausbringen, mittels der Markierungsvorrichtung 51 aufweist, und der Schritt b) Ausbringen von Baustoff BS zur Herstellung von dem anderen Bereich B2 mittels der Ausbringvorrichtung 1 aufweist.

Insbesondere ist das System 20 zum Durchführen des zuvor beschrieben Verfahrens ausgebildet, insbesondere führt durch.

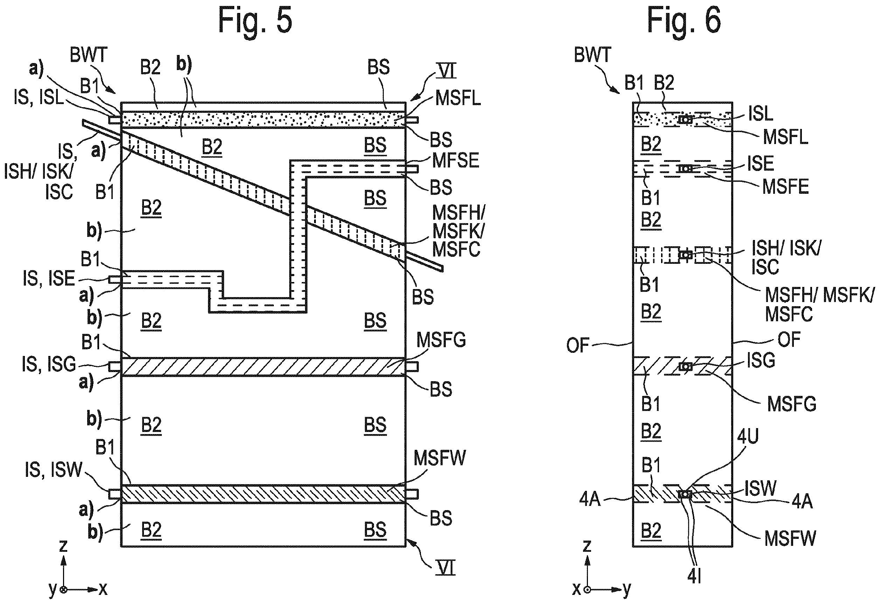

Fig. 5 und 6 zeigen das, insbesondere mittels des Verfahrens und/oder des Systems 20 hergestellte, erfindungsgemäße Bauwerksteil BWT. Das Bauwerksteil BWT weist mindestens den ersten Bereich B1 und den an den ersten anschließenden, zweiten Bereich B2 auf. In dem ersten Bereich B1 ist die Installationsstruktur IS von Baustoff BS verborgen. Der eine Bereich B1, im gezeigten Ausführungsbeispiel der erste Bereich B1, weist ausgebrachten Baustoff BS versehen mit Markierungsstoff MS auf. Der andere Bereich B2, im gezeigten Ausführungsbeispiel der zweite Bereich B2, weist ausgebrachten Baustoff BS auf.

Im Detail ist der Markierungsstoff MS einer Oberfläche OF des Baustoffs BS und/oder des Bauwerkteils BWT räumlich näher als die Installationsstruktur IS angeordnet, insbesondere in einer zu der Oberfläche OF orthogonalen Richtung y.

Im gezeigten Ausführungsbeispiel ist der Markierungsstoff, insbesondere teilweise, an der Oberfläche OF angeordnet.

Des Weiteren ist im gezeigten Ausführungsbeispiel der Markierungsstoff MS ein ferromagnetischer Stoff MSM und eine Farbe MSF. Im gezeigten Ausführungsbeispiel ist der Baustoff BS durch den Markierungsstoff MS, die Farbe MSF, in dem einen Bereich B1, durchfärbt Im Detail ist die Installationsstruktur IS aus einer Menge von verschiedenen Installationstypen ISG, ISW, ISH/ISK/ISC, ISL, ISE. Den verschiedenen Installationstypen ISG, ISW, ISH/ISK/ISC, ISL, ISE sind verschiedene Farben MSFG, MSFW, MSFH/MSFK/MSFC, MSFL, MSFE zugeordnet.

Außerdem ist die Installationsstruktur IS eine Gasinstallation ISG, eine Wasserinstallation ISW, eine Heizungs-, Kühlungs- und/oder Klimainstallation ISH/ISK/ISC, eine Lüftungsinstallation ISL und/oder eine Elektroinstallation ISE.

Weiter weist im gezeigten Ausführungsbeispiel der Schritt a) auf: Einbringen der Installationsstruktur IS in den Baustoff BS.

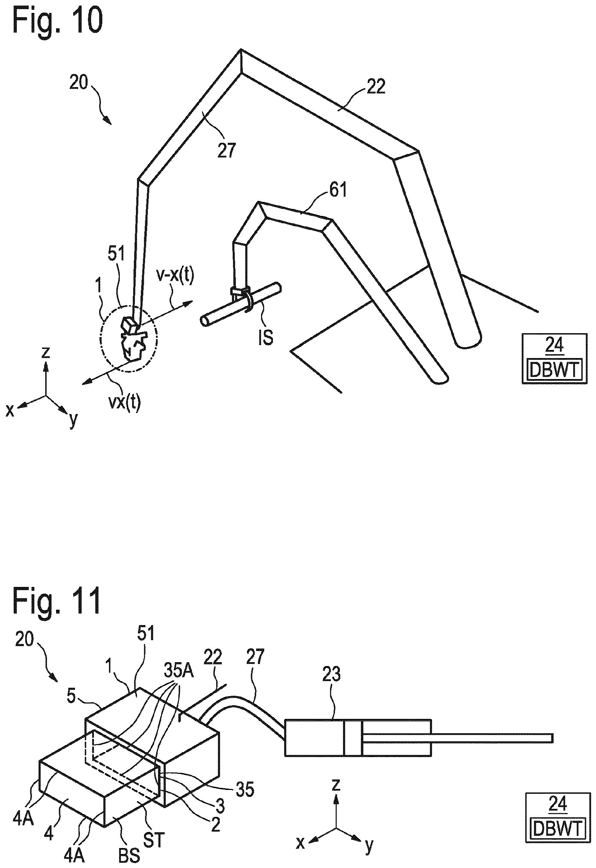

Zudem weist das System 20 eine ansteuerbare Einbringvorrichtung 61 auf, wie in Fig. 10 gezeigt. Die Einbringvorrichtung 61 ist zum Einbringen der Installationsstruktur IS in den Baustoff BS ausgebildet. Die Steuereinrichtung 24 ist zum Ansteuern der Einbringvorrichtung 61 derart ausgebildet, insbesondere steuert derart an, dass im gezeigten Ausführungsbeispiel der Schritt a) Einbringen der Installationsstruktur IS in den Baustoff BS aufweist.

Im gezeigten Ausführungsbeispiel weist die Einbringvorrichtung 61 einen, insbesondere elektrisch, ansteuerbaren Arm und/oder eine, insbesondere elektrisch, ansteuerbare Hand an.

Des Weiteren weist das System 20 eine ansteuerbare, gemeinsame Bewegungsvorrichtung 22, insbesondere einen ansteuerbaren, gemeinsamen Bewegungsarm, auf, wie in Fig. 10 gezeigt. Die gemeinsame Bewegungsvorrichtung 22 ist zur gemeinsamen, insbesondere mindestens translatorischen, Bewegung der Ausbringvorrichtung 1 und der Markierungsvorrichtung 51, insbesondere gleichzeitig mit dem Ausbringen und dem Versehen, ausgebildet, insbesondere bewegt gemeinsam. Die Steuereinrichtung 24 ist zum, insbesondere automatischen, Ansteuern der gemeinsamen Bewegungsvorrichtung 22 ausgebildet, insbesondere steuert an.

Im gezeigten Ausführungsbeispiel sind/ist zusätzlich die gemeinsame Bewegungsvorrichtung 22 und/oder die Ausbringvorrichtung 1 und/oder die Markierungsvorrichtung 51 zur, insbesondere gemeinsamen, rotatorischen Bewegung der Ausbringvorrichtung 1 und der Markierungsvorrichtung 51, insbesondere gleichzeitig mit dem Ausbringen und dem Versehen, ausgebildet, insbesondere rotieren/rotiert.

Im Detail ist die gemeinsame Bewegungsvorrichtung 22 zur gemeinsamen Bewegung der Ausbringvorrichtung 1 und der Markierungsvorrichtung 51 in einer, insbesondere horizontalen, Bewegungsrichtung -x ausgebildet. Die Ausbringvorrichtung 1 ist zum Ausbringen von Baustoff BS in einer zu der Bewegungsrichtung -x nicht-orthogonalen, insbesondere umgekehrten, insbesondere entgegengesetzten, Ausbringrichtung x, insbesondere gleichzeitig mit der gemeinsamen Bewegung, ausgebildet.

Zusätzlich oder alternativ ist das System 20, insbesondere die Ausbringvorrichtung 1, zum Ausbringen von Baustoff BS mit einer, insbesondere variabel, insbesondere kontinuierlich, einstellbaren, Ausbringgeschwindigkeit vx ausgebildet. Die gemeinsame Bewegungsvorrichtung 22 ist zur gemeinsamen Bewegung der Ausbringvorrichtung 1 und der Markierungsvorrichtung 51 mit einer der Ausbringgeschwindigkeit vx, insbesondere etwa, gleichenden Bewegungsgeschwindigkeit v-x, insbesondere gleichzeitig mit dem Ausbringen, ausgebildet.

Außerdem weist das Verfahren ein 3D-Druckverfahren, insbesondere Extrusionsverfahren, auf. Das 3D-Druckverfahren weist mindestens das Ausbringen von Baustoff BS auf.

Im gezeigten Ausführungsbeispiel weist zusätzlich das 3D-Druckverfahren das Versehen von Baustoff BS mit Markierungsstoff MS auf.

Weiter weist das System 20 ein 3D-Drucksystem, insbesondere Extrusionssystem, auf, insbesondere ist ein 3D-Drucksystem, wie in Fig. 7 bis 9 gezeigt. Das System bzw. 3D-Drucksystem 20 weist mindestens die Ausbringvorrichtung 1 auf.

Im gezeigten Ausführungsbeispiel weist zusätzlich das System bzw. 3D-Drucksystem 20 die Markierungsvorrichtung 51 auf.

Im Detail ist die Ausbringvorrichtung 1 eine Druckvorrichtung bzw. Extrusionsvorrichtung zur Extrusion von einem Strang ST von Baustoff BS zum 3D-Druck von dem Bauwerksteil BWT. Die Ausbringvorrichtung bzw. Extrusionsvorrichtung 1 weist eine Extruderdüse 5 auf. Die Extruderdüse 5 weist eine, insbesondere rechteckförmige, Ausbringöffnung 2 zum Ausbringen des Strangs ST von Baustoff BS aus der Extrusionsvorrichtung 1 heraus in der, insbesondere nahezu horizontalen, Ausbringrichtung x auf.

Insbesondere ist die Extruderdüse 5, insbesondere die Ausbringöffnung 2, röhrenförmig und/oder, insbesondere durch mindestens eine Umfangswand 7a, 7b, 7c, 7d, umfangsseitig geschlossen, insbesondere in/entgegen einer, insbesondere zu der Ausbringrichtung x orthogonalen, ersten Umfangsrichtung y und/oder einer, insbesondere zu der Ausbringrichtung x orthogonalen, zweiten Umfangsrichtung z. Zusätzlich oder alternativ weist die Ausbringöffnung 2 eine, insbesondere maximale, Öffnungsbreite BO von minimal 100 mm, insbesondere minimal 200 mm, und/oder maximal 800 mm, insbesondere maximal 600 mm, im gezeigten Ausführungsbeispiel 400 mm, auf, insbesondere in der ersten Umfangsrichtung y. Weiter zusätzlich oder alternativ weist die Ausbringöffnung 2 eine, insbesondere maximale, Öffnungshöhe HO von minimal 15 mm, insbesondere minimal 25 mm, und/oder maximal 400 mm, insbesondere maximal 200 mm, insbesondere maximal 100 mm, im gezeigten Ausführungsbeispiel 50 mm, auf, insbesondere in der zweiten Umfangsrichtung z.

Im gezeigten Ausführungsbeispiel weist zusätzlich das System bzw. 3D-Drucksystem 20, insbesondere die Ausbringvorrichtung bzw. Extrusionsvorrichtung 1, mindestens ein Vorgabeelement, insbesondere Formvorgabeelement, 7a, 7b, 8a, 8b, 30a, 30b und mindestens eine, insbesondere elektrisch, ansteuerbare, insbesondere elektrische, Einstellvorrichtung 213, 217a, 217b, 218a, 218b auf. Das mindestens eine Vorgabeelement 7a, 7b, 8a, 8b, 30a, 30b ist zur variablen, insbesondere kontinuierlich, einstellbaren Vorgabe, insbesondere Formvorgabe, mindestens eines Teils, insbesondere Rands, 4A, 4I eines, insbesondere rechteckförmigen, Strangquerschnitts, insbesondere einer Fläche des Strangquerschnitts, 4 des Strangs ST von Baustoff BS, insbesondere gleichzeitig mit dem Ausbringen, variabel, insbesondere kontinuierlich, einstellbar, insbesondere beweglich, ausgebildet, insbesondere in/entgegen der ersten Umfangsrichtung y und/oder der zweiten Umfangsrichtung z, insbesondere in mindestens zwei verschiedene Einstellungen. Die mindestens eine Einstellvorrichtung 213, 217a, 217b, 218a, 218b ist zur, insbesondere automatischen, variablen, insbesondere kontinuierlichen, Einstellung des mindestens einen Vorgabeelements 7a, 7b, 8a, 8b, 30a, 30b ausgebildet.

Im Detail weist die Extruderdüse 5 mehrere Umfangswände 7a, 7b, 7c, 7d auf. Die Umfangswände 7a, 7b, 7c, 7d definieren bzw. begrenzen die Ausbringöffnung 2 umfangsseitig. Das mindestens eine Vorgabeelement weist mindestens eine der Umfangswände 7a, 7b auf. Die mindestens eine Umfangswand 7a, 7b ist zur variabel einstellbaren Definierung bzw. Begrenzung eines Außenrands bzw. Außenteils 35A eines, insbesondere formgebenden und/oder rechteckförmigen, Strömungsquerschnitts 35 von Baustoff BS innerhalb der Extruderdüse 5 zur variablen einstellbaren Vorgabe eines Außenrands bzw. Außenteils 4A des Strangquerschnitts 4 variabel einstellbar ausgebildet.

Des Weiteren weist das mindestens eine Vorgabeelement mindestens ein Innenelement 30a, 30b auf. Das mindestens eine Innenelement 30a, 30b ist zur variabel einstellbaren, insbesondere vollständigen, Anordnung innerhalb der Extruderdüse 5 zur variabel einstellbaren Definierung bzw. Begrenzung, insbesondere mindestens, eines Innenrands bzw. Innenteils 35I des Strömungsquerschnitts 35 von Baustoff BS innerhalb der Extruderdüse 5 zur variabel einstellbaren Vorgabe, insbesondere mindestens, eines Innenrands bzw. Innenteils 4I des Strangquerschnitts 4 variabel einstellbar ausgebildet, insbesondere relativ zu der Extruderdüse 5 beweglich.

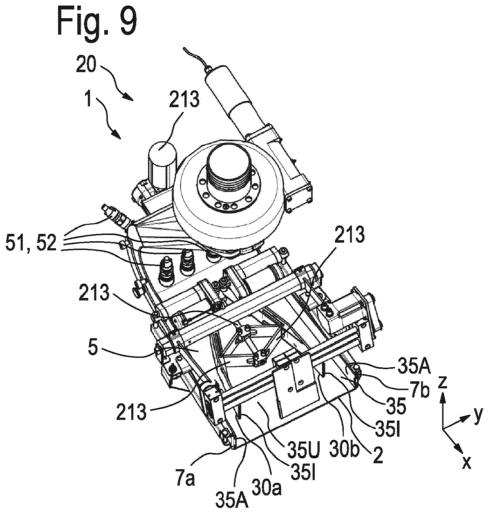

Insbesondere gibt das mindestens eine Innenelement 30a, 30b in einer in Fig. 9 gezeigten Einstellung eine Zweiteilung mit einer, insbesondere rechteckförmigen, Unterbrechung 35U, 4U, insbesondere in einer, insbesondere horizontalen, Richtung, insbesondere in der ersten Umfangsrichtung y, insbesondere des Strömungsquerschnitts 35, und somit des Strangquerschnitts 4 vor, wie in Fig. 6 gezeigt.

Außerdem weist das mindestens eine Vorgabeelement mindestens ein, insbesondere rechteckförmiges, Abdeckelement 8a, 8b auf. Das mindestens eine Abdeckelement 8a, 8b ist zur variabel einstellbaren Abdeckung mindestens eines Teils 2a der Ausbringöffnung 2 zur variabel einstellbaren Vorgabe mindestens eines Teils bzw. Rands 4A, 41, insbesondere des Außenrands 4A und/oder des Innenrands 41, des Strangquerschnitts 4 durch mindestens einen unabgedeckten Teil 2b der Ausbringöffnung 2, insbesondere eines Öffnungsquerschnitts 3 der Ausbringöffnung 2, variabel einstellbar ausgebildet, insbesondere relativ zu der Ausbringöffnung 2 bzw. der Extruderdüse 5 beweglich.

Insbesondere deckt das mindestens eine Abdeckelement 8a, 8b in einer in Fig. 7 und 8 gezeigten Einstellung den, insbesondere inneren und/oder rechteckförmigen, Teil 2a der Ausbringöffnung 2 derart ab, dass der Öffnungsquerschnitt 3, insbesondere rechteckförmig und, zweigeteilt mit einer, insbesondere rechteckförmigen, Unterbrechung 3U ist, insbesondere in einer, insbesondere horizontalen, Richtung, insbesondere in der ersten Umfangsrichtung y. Somit gibt der zweigeteilte, insbesondere rechteckförmige, Öffnungsquerschnitt 3 mit der, insbesondere rechteckförmigen, Unterbrechung 3U den zweigeteilten, insbesondere rechteckförmigen, Strangquerschnitt 4 mit einer, insbesondere rechteckförmigen, Unterbrechung 4U des, insbesondere ausgebrachten, Strangs ST von Baustoff BS vor, wie in Fig. 6 gezeigt.

Weiter ist das mindestens eine Abdeckelement 8. 8a, 8b zur Abtrennung, insbesondere zur Abschneidung, des, insbesondere ausgebrachten, Strangs ST von Baustoff BS von der Ausbringvorrichtung bzw. Extrusionsvorrichtung 1, insbesondere von der Extruderdüse 5, insbesondere an der Ausbringöffnung 2, variabel einstellbar ausgebildet.

Zudem ist das System bzw. 3D-Drucksystem bzw. Extrusionssystem 20, insbesondere die Ausbringvorrichtung bzw. Extrusionsvorrichtung 1, zum Ablegen des, insbesondere ausgebrachten, Strangs ST derart ausgebildet, dass der, insbesondere abgelegte, Strang ST seinen Strangquerschnitt 4 beibehält, insbesondere des ausgebrachten Strangs ST. In anderen Worten: das System bzw. 3D-Drucksystem bzw. Extrusionssystem, insbesondere die Ausbringvorrichtung bzw. Extrusionsvorrichtung, braucht oder kann nicht derart ausgebildet sein, dass der Baustoff auf eine bereits bestehende Baustoffschicht bzw. -lage gedrückt und damit verformt werden braucht oder kann.

Des Weiteren kann der Strang ST, insbesondere schichtweise, auf einem bereits ausgebrachten bzw. gedruckten bzw. extrudierten Strang ST abgelegt werden und/oder auf dem Strang ST kann, insbesondere schichtweise, ein weiterer Strang ST abgelegt werden, wie in Fig. 1 bis 6 gezeigt.

Außerdem weist der Schritt a) auf: Beimischen, insbesondere Einspritzen, von Markierungsstoff MS in den Baustoff BS zeitlich vor dem Ausbringen und Ausbringen von Baustoff BS mit dem beigemischten, insbesondere eingespritzten, Markierungsstoff MS.

Weiter ist die Markierungsvorrichtung 51, insbesondere aufweisend mindestens eine, insbesondere ansteuerbare, Einspritzdüse 52, im gezeigten Ausführungsbeispiel zehn Einspritzdüsen 52, zum Beimischen, insbesondere Einspritzen, von Markierungsstoff MS in den Baustoff BS zeitlich vor dem Ausbringen ausgebildet. Die Ausbringvorrichtung bzw. Extrusionsvorrichtung 1 ist zum Ausbringen von Baustoff BS mit dem beigemischten, insbesondere eingespritzten, Markierungsstoff MS ausgebildet.

Im gezeigten Ausführungsbeispiel ist die mindestens eine Einspritzdüse 52 mindestens eine getaktete Hochdruckdüse mit einem Druck größer 10 bar, insbesondere größer 100 bar. Zusätzlich oder alternativ ist die Markierungsvorrichtung 51, insbesondere die mindestens eine Einspritzdüse 52, in der zweiten Umfangsrichtung z oberhalb der Extruderdüse 5 bzw. der Umfangswand 7d und/oder entgegen der Ausbringrichtung -x hinter der Extruderdüse 5 angeordnet. Insbesondere ist die Markierungsvorrichtung 51, insbesondere die mindestens eine Einspritzdüse 52, maximal 1000 mm, insbesondere maximal 800 mm, insbesondere maximal 600 mm, und/oder minimal 100 mm, insbesondere minimal 200 mm, insbesondere minimal 400 mm, vor der Ausbringöffnung 2 angeordnet. Dies, insbesondere die Anordnung, ermöglicht, eine möglichst geringe Menge an mit Markierungsstoff versehenem Baustoff in der Ausbringvorrichtung bzw. Extrusionsvorrichtung 1 zu haben.

Zudem weist das System 20 eine ansteuerbare Baustoffpumpe 23 auf, wie in Fig. 11 gezeigt. Die Baustoffpumpe 23 ist zur Förderung von Baustoff BS aus der Ausbringvorrichtung 1 heraus ausgebildet. Die Steuereinrichtung 24 ist zum, insbesondere automatischen, Ansteuern der Baustoffpumpe 23 ausgebildet.

Im gezeigten Ausführungsbeispiel ist die Baustoffpumpe 23 diskontinuierlich, insbesondere eine Kolbenpumpe. Zusätzlich oder alternativ weist das System 20 eine Baustoffförderleitung 27 auf, wobei die Baustoffförderleitung 27 die Baustoffpumpe 23 mit der Ausbringvorrichtung 1 für eine Strömung von Baustoff BS von der Baustoffpumpe 23 durch die Baustoffförderleitung 27 hindurch zu der Ausbringvorrichtung 1 verbindet.

Des Weiteren ist die Steuereinrichtung 24 zum, insbesondere automatischen, Ansteuern der Ausbringvorrichtung 1, insbesondere der mindestens einen Einstellvorrichtung 213, 217a, 217b, 218a, 218b, der Markierungsvorrichtung 51, insbesondere der mindestens einen Einspritzdüse 52, der Einbringvorrichtung 61, der gemeinsamen Bewegungsvorrichtung 22 und/oder der Baustoffpumpe 23 in Abhängigkeit von Daten DBWT des herzustellenden Bauwerkteils BWT ausgebildet.

Im gezeigten Ausführungsbeispiel weist das, insbesondere hergestellte, Bauwerksteil BWT fünf erste Bereiche B1 auf, wie in Fig. 1 bis 6 gezeigt. In alternativen Ausführungsbeispielen kann das Bauwerksteil nur einen einzigen ersten Bereich oder zwei, drei, vier oder mindestens sechs erste Bereiche aufweisen. Außerdem weist im gezeigten Ausführungsbeispiel das, insbesondere hergestellte, Bauwerksteil BWT sechs zweite Bereiche B2 auf. In alternativen Ausführungsbeispielen kann das Bauwerksteil nur einen einzigen zweiten Bereich oder zwei, drei, vier, fünf oder mindestens sieben zweite Bereiche aufweisen.

Im Detail wird zum, insbesondere zeitlichen, Anfang der Herstellung des Bauwerkteils BWT in dem Schritt b) Baustoff BS zur Herstellung von dem anderen, insbesondere zweiten, Bereich B2 ausgebracht, wie in Fig. 1 gezeigt.

Zeitlich danach wird in dem Schritt a) Baustoff BS zur Herstellung von dem einen, insbesondere ersten, Bereich B1 ausgebracht, der Baustoff BS wird mit Markierungsstoff MS versehen und die Installationsstruktur IS wird in den Baustoff BS eingebracht, wie in Fig. 2 gezeigt. Insbesondere ist die Installationsstruktur IS eine Wasserinstallation ISW und der Wasserinstallation ISW ist die Farbe MFSW, insbesondere blau, in den Fig. 2 bis 6 in Schraffur von links oben nach rechts unten gezeigt, zugeordnet. Zusätzlich oder alternativ wird oder ist der Baustoff BS, insbesondere in dem ersten Bereich B1, mit der Farbe MFSW derart versehen, dass der Baustoff BS und/oder das Bauwerkteil BWT, insbesondere seine Oberfläche OF, einen Farbverlauf, insbesondere zunehmender Intensität, in, vertikaler, Richtung z der Installationsstruktur ISW aufweist, in den Fig. 2 bis 6 durch schwächere bzw. stärkere Schraffur gezeigt.

Zeitlich danach wird in dem Schritt b) Baustoff BS zur Herstellung von dem anderen, insbesondere zweiten, Bereich B2 ausgebracht, wie in Fig. 3 gezeigt.

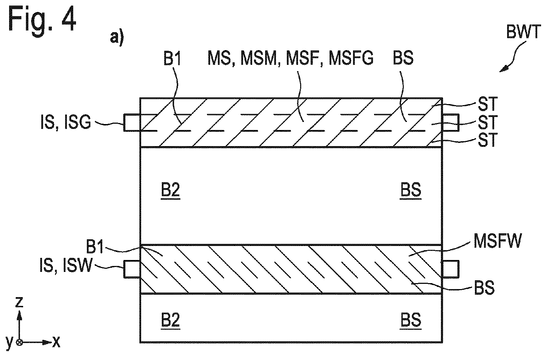

Zeitlich danach wird in dem Schritt a) Baustoff BS zur Herstellung von dem einen, insbesondere ersten, Bereich B1 ausgebracht, der Baustoff BS wird mit Markierungsstoff MS versehen und die Installationsstruktur IS wird in den Baustoff BS eingebracht, wie in Fig. 4 gezeigt. Insbesondere ist die Installationsstruktur IS eine Gasinstallation ISG und der Gasinstallation ISG ist die Farbe MFSG, insbesondere gelb, in den Fig. 4 bis 6 in Schraffur von rechts oben nach links unten gezeigt, zugeordnet.

Zeitlich danach wird in den Schritten b) Baustoff BS zur Herstellung von den anderen, insbesondere zweiten, Bereichen B2 ausgebracht und in den Schritten a) wird Baustoff BS zur Herstellung von den einen, insbesondere ersten, Bereichen B1 ausgebracht, der Baustoff BS wird mit Markierungsstoff MS versehen und die Installationsstrukturen IS werden in den Baustoff BS eingebracht, wie in Fig. 5 und 6 gezeigt.

Insbesondere sind die Installationsstrukturen IS eine Elektroinstallation ISE, eine Heizungs-, Kühlungs- und/oder Klimainstallation ISH/ISK/ISC und/oder eine Lüftungsinstallation ISL. Der Elektroinstallation ISE ist die Farbe MFSE, insbesondere lila, in den Fig. 5 und 6 in Schraffur von rechts nach links gezeigt, zugeordnet. Der Heizungs-, Kühlungs- und/oder Klimainstallation ISH/ISK/ISC ist die Farbe MFSH/MSFK/MSFC, insbesondere rot, in den Fig. 5 und 6 in Schraffur von oben nach unten gezeigt, zugeordnet. Zusätzlich oder alternativ wird oder ist der Baustoff BS, insbesondere in dem ersten Bereich B1, mit der Farbe MFSH/MSFK/MSFC derart versehen, dass der Baustoff BS und/oder das Bauwerkteil BWT, insbesondere seine Oberfläche OF, einen Farbverlauf, insbesondere zunehmender Intensität, in, vertikaler und horizontaler, Richtung z, y der Installationsstruktur ISH/ISK/ISC aufweist, in den Fig. 5 und 6 durch schwächere bzw. stärkere Schraffur gezeigt. Der Lüftungsinstallation ISL ist die Farbe MFSL, insbesondere grün, in den Fig. 5 und 6 in gepunkteter Schraffur gezeigt, zugeordnet.

Wie die gezeigten und oben erläuterten Ausführungsbeispiele deutlich machen, stellt die Erfindung einen vorteilhaftes Verfahren zur Herstellung von einem Bauwerksteil, ein vorteilhaftes System zur Herstellung von einem Bauwerksteil und ein vorteilhaftes Bauwerkteils bereit, das, insbesondere jeweils, verbesserte Eigenschaften aufweist.- - - - - - - - - - - - - - -

## Patentansprüche

1. Verfahren zur Herstellung von einem Bauwerksteil (BWT), wobei das Bauwerksteil (BWT) mindestens einen ersten Bereich (B1) und einen an den ersten anschließenden, zweiten Bereich (B2) aufweist, wobei in dem ersten Bereich (B1) eine Installationsstruktur (IS) von Baustoff (BS) verborgen ist, wobei das Verfahren die Schritte aufweist:
- a) Ausbringen von Baustoff (BS) zur Herstellung von dem einen Bereich (B1) und Versehen des Baustoffs (BS) mit Markierungsstoff (MS) zeitlich vor, gleichzeitig mit und/oder zeitlich nach dem Ausbringen, und
- b) Ausbringen von Baustoff (BS) zur Herstellung von dem anderen Bereich (B2),
- wobei der Markierungsstoff (MS) eine Farbe (MSF) ist, **dadurch gekennzeichnet, dass**
- die Installationsstruktur (IS) aus einer Menge von verschiedenen Installationstypen (ISG, ISW, ISH, ISK, ISC, ISL, ISE) ist, wobei den verschiedenen Installationstypen (ISG, ISW, ISH, ISK, ISC, ISL, ISE) verschiedene Farben (MSFG, MSFW, MSFH, MSFK, MSFC, MSFL, MSFE) zugeordnet sind.

2. Verfahren nach Anspruch 1,
- wobei der Markierungsstoff (MS) einer Oberfläche (OF) des Baustoffs (BS) und/oder des Bauwerkteils (BWT) räumlich näher als die Installationsstruktur (IS) angeordnet ist.

3. Verfahren nach einem der vorhergehenden Ansprüche,
- wobei der Markierungsstoff (MS) ein ferromagnetischer Stoff (MSM) ist.

4. Verfahren nach einem der vorhergehenden Ansprüche,
- wobei die Installationsstruktur (IS) eine Gasinstallation (ISG), eine Wasserinstallation (ISW), eine Heizungsinstallation (ISH), eine Kühlungsinstallation (ISK), eine Klimainstallation (ISC), eine Lüftungsinstallation (ISL) und/oder eine Elektroinstallation (ISE) ist.

5. Verfahren nach einem der vorhergehenden Ansprüche,
- wobei entweder der Schritt a) oder der Schritt b) aufweist: Einbringen der Installationsstruktur (IS) in den Baustoff (BS).

6. Verfahren nach einem der vorhergehenden Ansprüche,
- wobei das Verfahren ein 3D-Druckverfahren aufweist, wobei das 3D-Druckverfahren mindestens das Ausbringen von Baustoff (BS) aufweist.

7. Verfahren nach einem der vorhergehenden Ansprüche,
- wobei der Schritt a) aufweist: Beimischen, insbesondere Einspritzen, von Markierungsstoff (MS) in den Baustoff (BS) zeitlich vor dem Ausbringen und Ausbringen von Baustoff (BS) mit dem beigemischten, insbesondere eingespritzten, Markierungsstoff (MS).

8. System (20) zur Herstellung von einem Bauwerksteil (BWT), wobei das Bauwerksteil (BWT) mindestens einen ersten Bereich (B1) und einen an den ersten anschließenden, zweiten Bereich (B2) aufweist, wobei in dem ersten Bereich (B1) eine Installationsstruktur (IS) von Baustoff (BS) verborgen ist, wobei das System (20) aufweist:
- eine ansteuerbare Ausbringvorrichtung (1), die zum Ausbringen von Baustoff (BS) ausgebildet ist,
- eine ansteuerbare Markierungsvorrichtung (51), die zum Versehen des Baustoffs (BS) mit Markierungsstoff (MS) zeitlich vor, gleichzeitig mit und/oder zeitlich nach dem Ausbringen ausgebildet ist, und
- eine Steuereinrichtung (24), die zum, insbesondere automatischen, Ansteuern der Ausbringvorrichtung (1) und der Markierungsvorrichtung (51) derart ausgebildet ist, dass ein Schritt a) Ausbringen von Baustoff (BS) zur Herstellung von dem einen Bereich (B1) mittels der Ausbringvorrichtung (1) und Versehen des Baustoffs (BS) mit Markierungsstoff (MS) zeitlich vor, gleichzeitig mit und/oder zeitlich nach dem Ausbringen mittels der Markierungsvorrichtung (51) aufweist, und ein Schritt b) Ausbringen von Baustoff (BS) zur Herstellung von dem anderen Bereich (B2) mittels der Ausbringvorrichtung (1) aufweist,
- wobei der Markierungsstoff (MS) eine Farbe (MSF) ist, **dadurch gekennzeichnet, dass**
- die Installationsstruktur (IS) aus einer Menge von verschiedenen Installationstypen (ISG, ISW, ISH, ISK, ISC, ISL, ISE) ist, wobei den verschiedenen Installationstypen (ISG, ISW, ISH, ISK, ISC, ISL, ISE) verschiedene Farben (MSFG, MSFW, MSFH, MSFK, MSFC, MSFL, MSFE) zugeordnet sind.

9. System (20) nach Anspruch 8, wobei das System (20) aufweist:
- eine ansteuerbare Einbringvorrichtung (61), die zum Einbringen der Installationsstruktur (IS) in den Baustoff (BS) ausgebildet ist,
- wobei die Steuereinrichtung (24) zum, insbesondere automatischen, Ansteuern der Einbringvorrichtung (61) derart ausgebildet ist, dass entweder der Schritt a) oder der Schritt b) Einbringen der Installationsstruktur (IS) in den Baustoff (BS) aufweist.

10. System (20) nach Anspruch 8 oder 9, wobei das System (20) aufweist:
- eine ansteuerbare, gemeinsame Bewegungsvorrichtung (22), insbesondere einen ansteuerbaren, gemeinsamen Bewegungsarm, wobei die gemeinsame Bewegungsvorrichtung (22) zur gemeinsamen Bewegung der Ausbringvorrichtung (1) und der Markierungsvorrichtung (51), insbesondere gleichzeitig mit dem Ausbringen und dem Versehen, ausgebildet ist,
- wobei die Steuereinrichtung (24) zum, insbesondere automatischen, Ansteuern der gemeinsamen Bewegungsvorrichtung (22) ausgebildet ist.

11. System (20) nach einem der Ansprüche 8 bis 10,
- wobei das System (20) ein 3D-Drucksystem aufweist, wobei das 3D-Drucksystem mindestens die Ausbringvorrichtung (1) aufweist.

12. System (20) nach einem der Ansprüche 8 bis 11,
- wobei die Markierungsvorrichtung (51), insbesondere aufweisend mindestens eine Einspritzdüse (52), zum Beimischen, insbesondere Einspritzen, von Markierungsstoff (MS) in den Baustoff (BS) zeitlich vor dem Ausbringen ausgebildet ist, und
- die Ausbringvorrichtung (1) zum Ausbringen von Baustoff (BS) mit dem beigemischten, insbesondere eingespritzten, Markierungsstoff (MS) ausgebildet ist.

13. System (20) nach einem der Ansprüche 8 bis 12, wobei das System (20) aufweist:
- eine ansteuerbare Baustoffpumpe (23), die zur Förderung von Baustoff (BS) aus der Ausbringvorrichtung (1) heraus ausgebildet ist,
- wobei die Steuereinrichtung (24) zum, insbesondere automatischen, Ansteuern der Baustoffpumpe (23) ausgebildet ist.

14. System (20) nach einem der Ansprüche 8 bis 13,
- wobei die Steuereinrichtung (24) zum, insbesondere automatischen, Ansteuern der Ausbringvorrichtung (1), der Markierungsvorrichtung (51), der Einbringvorrichtung (61), der gemeinsamen Bewegungsvorrichtung (22) und/oder der Baustoffpumpe (23) in Abhängigkeit von Daten (DBWT) des herzustellenden Bauwerkteils (BWT) ausgebildet ist.

15. Bauwerksteil (BWT), wobei das Bauwerksteil (BWT) mindestens einen ersten Bereich (B1) und einen an den ersten anschließenden, zweiten Bereich (B2) aufweist, wobei in dem ersten Bereich (B1) eine Installationsstruktur (IS) von Baustoff (BS) verborgen ist, wobei der eine Bereich (B1) ausgebrachten Baustoff (BS) versehen mit Markierungsstoff (MS) aufweist, und wobei der andere Bereich (B2) ausgebrachten Baustoff (BS) aufweist, wobei der Markierungsstoff (MS) eine Farbe (MSF) ist, **dadurch gekennzeichnet, dass** die Installationsstruktur (IS) aus einer Menge von verschiedenen Installationstypen (ISG, ISW, ISH, ISK, ISC, ISL, ISE) ist, wobei den verschiedenen Installationstypen (ISG, ISW, ISH, ISK, ISC, ISL, ISE) verschiedene Farben (MSFG, MSFW, MSFH, MSFK, MSFC, MSFL, MSFE) zugeordnet sind.

## Claims

1. A method for producing a part of a building (BWT), wherein the part of a building (BWT) has at least one first region (B1) and one second region (B2), which adjoins the first region, wherein, in the first region (B1), an installation structure (IS) is concealed by building material (BS), wherein the method comprises the following steps:
- a) dispensing building material (BS) to produce the one region (B1) and providing the building material (BS) with a marking substance (MS) before, at the same time as and/or after the dispensing operation, and
- b) dispensing building material (BS) to produce the other region (B2)
- wherein the marking substance (MS) is a color (MSF),
**characterized in that**
- the installation structure (IS) is out of a set of different types of installation (ISG, ISW, ISH, ISK, ISC, ISL, ISE), wherein the different types of installation (ISG, ISW, ISH, ISK, ISC, ISL, ISE) are assigned different colors (MSFG, MSFW, MSFH, MSFK, MSFC, MSFL, MSFE).

2. The method as claimed in claim 1,
- wherein the marking substance (MS) is arranged spatially closer to a surface (OF) of the building material (BS) and/or of the part of a building (BWT) than the installation structure (IS) is.

3. The method as claimed in either of the preceding claims,
- wherein the marking substance (MS) is a ferromagnetic substance (MSM).

4. The method as claimed in either of the preceding claims,
- wherein the installation structure (IS) is a gas installation (ISG), a water installation (ISW), a heating installation (ISH), a cooling installation (ISK), an acclimate installation (ISC), a ventilation installation (ISL) and/or an electrical installation (ISE).

5. The method as claimed in either of the preceding claims,
- wherein either step a) or step b) comprises: introducing the installation structure (IS) into the building material (BS).

6. The method as claimed in either of the preceding claims,
- wherein the method comprises a 3D printing process, wherein the 3D printing process comprises at least the dispensing of building material (BS).

7. The method as claimed in either of the preceding claims,
- wherein step a) comprises: admixing, in particular injecting, a marking substance (MS) into the building material (BS) before the dispensing operation, and dispensing building material (BS) with the admixed, in particular injected, marking substance (MS).

8. A system (20) for producing a part of a building (BWT), wherein the part of a building (BWT) has at least one first region (B1) and one second region (B2), which adjoins the first region, wherein, in the first region (B1), an installation structure (IS) is concealed by building material (BS), wherein the system (20) comprises:
- a controllable dispensing device (1), which is designed to dispense building material (BS),
- a controllable marking device (51), which is designed to provide the building material (BS) with marking material (MS) before, at the same time as and/or after the dispensing operation, and
- a control device (24), which is designed to control the dispensing device (1) and the marking device (51), in particular automatically, in such a way that a step a) comprises dispensing building material (BS) to produce the one region (B1) by means of the dispensing device (1) and providing the building material (BS) with a marking substance (MS) before, at the same time as and/or after the dispensing by means of the marking device (51), and a step b) comprises dispensing building material (BS) to produce the other region (B2) by means of the dispensing device (1),
- wherein the marking substance (MS) is a color (MSF),
**characterized in that**
- the installation structure (IS) is out of a set of different types of installation (ISG, ISW, ISH, ISK, ISC, ISL, ISE), wherein the different types of installation (ISG, ISW, ISH, ISK, ISC, ISL, ISE) are assigned different colors (MSFG, MSFW, MSFH, MSFK, MSFC, MSFL, MSFE).

9. The system (20) as claimed in claim 8, wherein the system (20) comprises:
- a controllable introducing device (61), which is designed to introduce the installation structure (IS) into the building material (BS),
- wherein the control device (24) is designed to control the introducing device (61), in particular automatically, in such a way that either step a) or step b) comprises introducing the installation structure (IS) into the building material (BS).

10. The system (20) as claimed in claim 8 or 9, wherein the system (20) comprises:
- a controllable, common movement device (22), in particular a controllable, common movement arm, wherein the common movement device (22) is designed for the common movement of the dispensing device (1) and the marking device (51), in particular at the same time as the dispensing operation and the provision,
- wherein the control device (24) is designed to control the common movement device (22), in particular automatically.

11. The system (20) as claimed in one of claims 8 to 10,
- wherein the system (20) comprises a 3D printing system, wherein the 3D printing system comprises at least the dispensing device (1).

12. The system (20) as claimed in one of claims 8 to 11,
- wherein the marking device (51), in particular having at least one injection nozzle (52), is designed to admix, in particular inject, a marking substance (MS) into the building material (BS) before the dispensing operation, and
- the dispensing device (1) is designed to dispense building material (BS) with the admixed, in particular injected, marking substance (MS).

13. The system (20) as claimed in one of claims 8 to 12, wherein the system (20) comprises:
- a controllable building-material pump (23), which is designed to convey building material (BS) out of the dispensing device (1),
- wherein the control device (24) is designed to control the building-material pump (23), in particular automatically.

14. The system (20) as claimed in one of claims 8 to 13,
- wherein the control device (24) is designed to control the dispensing device (1), the marking device (51), the introducing device (61), the common movement device (22) and/or the building material pump (23), in particular automatically, as a function of data (DBWT) of the part of a building (BWT) that is to be produced.

15. A part of a building (BWT), wherein the part of a building (BWT) has at least one first region (B1) and one second region (B2), which adjoins the first region, wherein, in the first region (B1), an installation structure (IS) is concealed by building material (BS), wherein the one region (B1) comprises dispensed building material (BS) provided with a marking substance (MS), and wherein the other region (B2) comprises dispensed building material (BS), wherein the marking substance (MS) is a color (MSF), **characterized in that**
the installation structure (IS) is out of a set of different types of installation (ISG, ISW, ISH, ISK, ISC, ISL, ISE), wherein the different types of installation (ISG, ISW, ISH, ISK, ISC, ISL, ISE) are assigned different colors (MSFG, MSFW, MSFH, MSFK, MSFC, MSFL, MSFE).

## Revendications

1. Procédé permettant de produire un élément de construction (BWT), l'élément de construction (BWT) présentant au moins une première zone (B1) et une deuxième zone (B2) adjacente à la première, dans lequel une structure d'installation (IS) est dissimulée dans la première zone (B1) par un matériau de construction (BS), le procédé présentant les étapes consistant à :
- a) appliquer un matériau de construction (BS) pour produire ladite première zone (B1) et doter le matériau de construction (BS) d'une substance de marquage (MS) avant, simultanément avec et/ou après l'application, et
- b) appliquer le matériau de construction (BS) pour produire l'autre zone (B2),
- dans lequel la substance de marquage (MS) est un colorant (MSF),
**caractérisé en ce que**
- la structure d'installation (IS) provient d'une quantité de différents types d'installation (ISG, ISW, ISH, ISK, ISC, ISL, ISE), dans lequel les différents types d'installation (ISG, ISW, ISH, ISK, ISC, ISL, ISE) sont associés à différents colorants (MSFG, MSFW, MSFH, MSFK, MSFC, MSFL, MSFE).

2. Procédé selon la revendication 1,
- dans lequel la substance de marquage (MS) est disposée de manière physiquement plus proche d'une surface (OF) du matériau de construction (BS) et/ou de l'élément de construction (BWT) que la structure d'installation (IS).

3. Procédé selon l'une quelconque des revendications précédentes,
- dans lequel la substance de marquage (MS) est une substance ferromagnétique (MSM).

4. Procédé selon l'une quelconque des revendications précédentes,
- dans lequel la structure d'installation (IS) est une installation de gaz (ISG), une installation d'eau (ISW), une installation de chauffage (ISH), une installation de refroidissement (ISK), une installation de climatisation (ISC), une installation de ventilation (ISL) et/ou une installation électrique (ISE).

5. Procédé selon l'une quelconque des revendications précédentes,
- dans lequel soit l'étape a), soit l'étape b) présente : l'introduction de la structure d'installation (IS) dans le matériau de construction (BS) .

6. Procédé selon l'une quelconque des revendications précédentes,
- dans lequel le procédé présente un procédé d'impression 3D, le procédé d'impression 3D présentant au moins l'application du matériau de construction (BS) .

7. Procédé selon l'une quelconque des revendications précédentes,
- dans lequel l'étape a) présente : l'ajout, en particulier l'injection, d'une substance de marquage (MS) dans le matériau de construction (BS) avant l'application, et l'application du matériau de construction (BS) avec la substance de marquage (MS) ajoutée, en particulier injectée.

8. Système (20) permettant de produire un élément de construction (BWT), l'élément de construction (BWT) présentant au moins une première zone (B1) et une deuxième zone (B2) adjacente à la première, dans lequel une structure d'installation (IS) est dissimulée dans la première zone (B1) par le matériau de construction (BS), le système (20) présentant :
- un dispositif d'application pouvant être piloté (1) qui est réalisé pour appliquer le matériau de construction (BS),
- un dispositif de marquage pouvant être piloté (51) qui est réalisé pour doter le matériau de construction (BS) de la substance de marquage (MS) avant, simultanément avec et/ou après l'application, et
- un moyen de commande (24) qui est réalisé pour le pilotage, en particulier automatique, du dispositif d'application (1) et du dispositif de marquage (51) de telle sorte qu'une étape a) présente l'application du matériau de construction (BS) pour produire ladite une zone (B1) au moyen du dispositif d'application (1), et le fait de doter le matériau de construction (BS) de la substance de marquage (MS) avant, simultanément avec et/ou après l'application au moyen du dispositif de marquage (51), et qu'une étape b) présente l'application du matériau de construction (BS) pour produire l'autre zone (B2) au moyen du dispositif d'application (1),
- dans lequel la substance de marquage (MS) est un colorant (MSF),
**caractérisé en ce que**
- la structure d'installation (IS) provient d'une quantité de différents types d'installation (ISG, ISW, ISH, ISK, ISC, ISL, ISE), dans lequel les différents types d'installation (ISG, ISW, ISH, ISK, ISC, ISL, ISE) sont associés à différents colorants (MSFG, MSFW, MSFH, MSFK, MSFC, MSFL, MSFE).

9. Système (20) selon la revendication 8, dans lequel le système (20) présente :
- un dispositif d'introduction pouvant être piloté (61) qui est réalisé pour introduire la structure d'installation (IS) dans le matériau de construction (BS),
- dans lequel le moyen de commande (24) pour le pilotage, en particulier automatique, du dispositif d'introduction (61) est réalisé de telle sorte que soit l'étape a), soit l'étape b) présente l'introduction de la structure d'installation (IS) dans le matériau de construction (BS).

10. Système (20) selon la revendication 8 ou 9, dans lequel le système (20) présente :
- un dispositif de déplacement commun (22) pouvant être piloté, en particulier un bras de déplacement commun pouvant être piloté, dans lequel le dispositif de déplacement commun (22) est réalisé pour le déplacement commun du dispositif d'application (1) et du dispositif de marquage (51), en particulier simultanément avec l'application et le fait de doter,
- dans lequel le moyen de commande (24) est réalisé pour le pilotage, en particulier automatique, du dispositif de déplacement commun (22).

11. Système (20) selon l'une quelconque des revendications 8 à 10,
- dans lequel le système (20) présente un système d'impression 3D, dans lequel le système d'impression 3D présente au moins le dispositif d'application (1).

12. Système (20) selon l'une quelconque des revendications 8 à 11,
- dans lequel le dispositif de marquage (51), présentant en particulier au moins une buse d'injection (52), est réalisé pour ajouter, en particulier injecter, une substance de marquage (MS) dans le matériau de construction (BS) avant l'application, et
- le dispositif d'application (1) est réalisé pour appliquer un matériau de construction (BS) avec la substance de marquage (MS) ajoutée, en particulier injectée.

13. Système (20) selon l'une quelconque des revendications 8 à 12, dans lequel le système (20) présente :
- une pompe à matériau de construction pouvant être pilotée (23) qui est réalisée pour refouler le matériau de construction (BS) du dispositif d'application (1),
- dans lequel le moyen de commande (24) est réalisé pour le pilotage, en particulier automatique, de la pompe à matériau de construction (23).

14. Système (20) selon l'une quelconque des revendications 8 à 13,
- dans lequel le moyen de commande (24) est réalisé pour le pilotage, en particulier automatique, du dispositif d'application (1), du dispositif de marquage (51), du dispositif d'introduction (61), du dispositif de déplacement commun (22) et/ou de la pompe à matériau de construction (23) en fonction des données (DBWT) de l'élément de construction (BWT) à produire.

15. Elément de construction (BWT), dans lequel l'élément de construction (BWT) présente au moins une première zone (B1) et une deuxième zone (B2) adjacente à la première, dans lequel une structure d'installation (IS) est dissimulée dans la première zone (B1) par le matériau de construction (BS),
dans lequel ladite une zone (B1) présente le matériau de construction (BS) appliqué, doté d'une substance de marquage (MS), et dans lequel l'autre zone (B2) présente le matériau de construction (BS) appliqué, dans lequel la substance de marquage (MS) est un colorant (MSF),
**caractérisé en ce que** la structure d'installation (IS) provient d'une quantité de différents types d'installation (ISG, ISW, ISH, ISK, ISC, ISL, ISE), dans lequel les différents types d'installation (ISG, ISW, ISH, ISK, ISC, ISL, ISE) sont associés à différents colorants (MSFG, MSFW, MSFH, MSFK, MSFC, MSFL, MSFE).
